# EUROPÄISCHE PATENTSCHRIFT

(11) **EP 3 709 838 B1**
(45) Veröffentlichungstag und Bekanntmachung des Hinweises auf die Patenterteilung: **05.10.2022**
(21) Anmeldenummer: 18793172.0
(22) Anmeldetag: 10.10.2018
(51) Int. Cl.: A47B 17/02, A47B 91/02, F16B 7/10, F16M 7/00

(54) **LÄNGENVERSTELLBARE TRAGVORRICHTUNG**
LENGTH-ADJUSTABLE SUPPORT DEVICE
DISPOSITIF SUPPORT RÉGLABLE EN LONGUEUR

(30) Priorität: 16.11.2017 DE 202017010611 U
(43) Veröffentlichungstag der Anmeldung: 23.09.2020
(73) Patentinhaber: 90GRAD GmbH, 88090 Immenstaad (DE)
(72) Erfinder: RIEGGER, Mario, 88090 Immenstaad (DE)
(74) Vertreter: Stadler, Franz
(86) Internationale Anmeldenummer: PCT/EP2018/000467
(87) Internationale Veröffentlichungsnummer: WO 2019/096433

(56) Entgegenhaltungen:
- EP-A1- 0 165 190
- DE-A1- 19 511 176
- GB-A- 729 857

## Beschreibung

Die vorliegende Erfindung betrifft eine längenverstellbare Tragvorrichtung gemäß dem Oberbegriff des Anspruches 1, einen Tisch gemäß dem Oberbegriff des Anspruches 12, einen Einrichtungsgegenstand gemäß dem Oberbegriff des Anspruches 13, eine Maschine, Spülmaschine oder Waschmaschine gemäß dem Oberbegriff des Anspruches 14 und ein Stativ für eine Kamera gemäß dem Oberbegriff des Anspruches 15.

Längenverstellbare Tragvorrichtungen können in verschiedenen technischen Anwendungen eingesetzt werden. Insbesondere in Füßen von Tischen ermöglichen längenverstellbare Tragvorrichtungen eine Längenverstellbarkeit der Füße, so dass der Tisch eine unterschiedliche Höhe aufweist.

Die DE 101 48 972 A1 zeigt eine längenveränderbare Säule als sowohl Strebe für klappbare Elemente als auch Träger für höhenverstellbare Elemente bestehend aus einem ersten Teil und einem im ersten Teil teleskopartig geführtem zweiten Teil, wobei sich im zweitem Teil wenigstens eine umlaufende erste Nut befindet, dass in einer Querschnittsebene im ersten Teil mindestens drei Öffnungen zur losen Aufnahme jeweils eines Klemmkörpers eingebracht sind, dass die Abmessungen der ersten Nut im zweiten Teil und die Wandstärke des ersten Teiles so ausgebildet sind, dass die Klemmkörper in der ersten Nut und den Öffnungen über die Oberfläche des ersten Teils ragen, dass ein Klemmelement mit einer umlaufenden eingebrachten zweiten Nut auf dem ersten Teil geführt und über eine jeweils lösbare formschlüssige und/oder kraftschlüssige Verbindung mit dem ersten Teil verkoppelt ist, wobei die zweite Nut so ausgebildet ist, dass die Klemmkörper entweder über das Klemmelement in die erste Nut gedrückt werden oder sich die Klemmkörper vollständig und lose in den Öffnungen und der zweiten Nut befinden.

Die DE 94 07 987 U1 zeigt einen höhenverstellbaren Tischfuß, mit einem Standrohr, mit einem vertikal verschiebbar geführten Hubrohr und mit einer Verstelleinrichtung, die das Hubrohr gegen das Standrohr vertikal bewegt, wobei das Hubrohr durch ein inneres Führungsrohr geführt ist, welches koaxial in das Standrohr und in das Hubrohr eingreift, dass das obere Ende des Standrohres und das untere Ende des Hubrohres axial in eine Verstellhülse eingreifen, dass die Verstellhülse mit einem Innengewinde höhenverstellbar auf einem Außengewinde des Standrohres oder des Hubrohres angeordnet ist und dass die Verstellhülse axial an dem Standrohr abgestützt ist und das Hubrohr axial abstützt.

Die DE 934 122 B zeigt einen Beschlag zur lösbaren Verbindung der Füße von Tischen mit der Zarge der Tischplatte, wobei zwischen Zarge und Fuß eine mit der Zarge verbundene Verstärkungsplatte angeordnet ist, die breiter als der Fuß ist.

Die EP 0 165 190 A1 zeigt eine in der Länge verstellbare Stützvorrichtung. Die Länge kann mittels Anheben und Absenken verstellt werden, so dass Nocken in verschiedenen Positionen eines Führungskanales arretiert werden.

Die DE 195 11 176 A1 zeigt eine Vorrichtung zur Höhen- und/oder Neigungsverstellung der Tischplatte eines Tisches, wobei ein mit einem Ende fest oder schwenkbar am Tischgestell angebrachtes Außenrohr, das mehrere übereinander angeordnete Rastlöcher und einen fest angeordneten, in das Innere des Außenrohres ragenden, gegenüber den Rastlöchern befindlichen Führungsstift aufweist, und eine dreh- und verschiebbar im Außenrohr geführte und mit einem Ende gelenkig an der Tischplatte angebrachte Stange, die im unteren Bereich ein in eine ausgeschwenkte Raststellung federvorgespanntes Rastglied zum Eingreifen in die Rastlöcher des Außenrohres aufweist und auf ihrer dem Rastglied gegenüberliegenden Seite, seitlich zur Diagonalen versetzt, mit einer ersten, in Längsrichtung verlaufenden Führungsnut zur Aufnahme des Führungsstiftes des Außenrohres versehen ist, von der eine zweite Führungsnut abzweigt, die dem Rastglied diagonal gegenüber und parallel zur ersten Führungsnut ausgebildet ist und mit deren unteren Ende die erste Führungsnut über eine Abbiegung verbunden ist.

Die Aufgabe der vorliegenden Erfindung besteht deshalb darin, eine längenverstellbare Tragvorrichtung, einen Tisch, einen Einrichtungsgegenstand, eine Maschine, Spülmaschine oder Waschmaschine und ein Stativ für eine Kamera zur Verfügung zu stellen bei dem die temporäre formschlüssig arretierte Länge der Tragvorrichtung im Wesentlichen stufenlos mittels einer Veränderung der Länge der Tragvorrichtung einstellbar ist.

Diese Aufgabe wird gelöst mit einer längenverstellbaren Tragvorrichtung und/oder längenverstellbaren Säule und/oder längenverstellbaren Fuß, umfassend eine erste Stange, eine zweite Stange, eine an der ersten Stange ausgebildete Lagerung zur axial beweglichen Lagerung der zweiten Stange an der ersten Stange, sodass von der zweiten Stange eine Translationsbewegung relativ zu der ersten Stange ausführbar ist, ein bewegliches Fixierungselement zur formschlüssigen axialen Fixierung der beweglichen zweiten Stange an der ersten Stange, indem das Fixierungselement formschlüssig an einem Gegenformschlusselement befestigt ist, das Gegenformschlusselement zur formschlüssigen Verbindung mit dem Fixierungselement, wobei die längenverstellbare Tragvorrichtung einen Mechanismus umfasst und aufgrund des Mechanismus die axiale Translationsbewegung der zweiten Stange eine zusätzliche Rotationsbewegung der zweiten Stange verursacht, sodass die zweite Stange zwischen einer ersten Drehposition und einer zweiten Drehposition relativ zu der ersten Stange bewegbar ist mittels der axialen Translationsbewegung der zweiten Stange und in der ersten Drehposition das Fixierungselement und das Gegenformschlusselement in mechanischen Kontakt zueinander stehen und in der zweiten Drehposition der mechanische Kontakt zwischen dem Fixierungselement und dem Gegenformschlusselement aufgehoben ist, wobei das Fixierungselement als eine Rastnase oder ein Rastdorn ausgebildet ist und an dem Gegenformschlusselement Zähne ausgebildet sind für die formschlüssige Verbindung der Zähne mit dem Fixierungselement und die Zähne als Rastelemente ausgebildet sind. Der Mechanismus ermöglicht mittels einer axialen Translationsbewegung der zweiten Stange relativ zu der ersten Stange eine Rotationsbewegung der zweiten Stange relativ zu der ersten Stange von der ersten Drehposition in die zweite Drehposition und umgekehrt von der zweiten Drehposition in die erste Drehposition. Nur in der ersten Drehposition der zweiten Stange besteht ein mechanischer Kontakt zwischen dem Fixierungselement und dem Gegenformschlusselement, sodass dadurch nur in der ersten Drehposition eine formschlüssige Verbindung zwischen dem Gegenformschlusselement und dem Fixierungselement möglich ist. Eine Arretierung mittels einer formschlüssigen Verbindung zwischen dem Fixierungselement und dem Gegenformschlusselement der axialen Translationsbewegung der zweiten Stange relativ zu der ersten Stange ist damit nur in der ersten Drehposition ausführbar und in der zweiten Drehposition ist keine formschlüssige Verbindung zwischen dem Gegenformschlusselement und dem Fixierungselement möglich, sodass die zweite Stange in der zweiten Drehposition in sämtlichen axialen Bewegungsrichtungen relativ zu der ersten Stange bewegbar ist. Eine mögliche Arretierung oder Dearretierung der axialen Bewegung der zweiten Stange relativ zu der ersten Stange ist damit mittels der axialen Translationsbewegung der zweiten Stange relativ zu der ersten Stange steuerbar.

In einer zusätzlichen Ausgestaltung sind die Geometrie des Gegenformschlusselementes und/oder des Fixierungselements dahingehend ausgebildet, sodass bei der ersten Drehposition der zweiten Stange in einer ersten Bewegungsrichtung die zweite Stange relativ zu der ersten Stange axial beweglich als Translationsbewegung bewegbar ist und in einer zweiten Bewegungsrichtung die axiale Translationsbewegung der zweiten Stange relativ der ersten Stange blockiert und/oder arretiert ist aufgrund der formschlüssigen Verbindung zwischen dem Fixierungselement und dem Gegenformschlusselement, wobei die erste Bewegungsrichtung und die zweite Bewegungsrichtung entgegengesetzt zueinander ausgerichtet sind und die Zähne in Richtung der Bewegungsrichtung an einer ersten Seite im Wesentlichen senkrecht zu der Bewegungsrichtung der zweiten Stange ausgebildet sind und an einer zweiten Seite in einem spitzen Winkel, insbesondere zwischen 20° und 70°, zu der Bewegungsrichtung ausgebildet sind und die erste und zweite Seite gegenüberliegende Seiten sind und das Fixierungselement an einer Seite im Wesentlichen, insbesondere mit einer Abweichung von weniger als 30°, 20°, 10° oder 5°, senkrecht zu der Bewegungsrichtung der zweiten Stange ausgebildet, so dass mittels des Aufliegens der Seite des Fixierungselementes auf der ersten Seite der Zähne die axiale Bewegung der zweiten Stange relativ zu der ersten Stange in einer Bewegungsrichtung blockiert ist, wobei vorzugsweise die Seite des Fixierungselementes im Wesentlichen eben ausgebildet ist. Bei der ersten Drehposition der zweiten Stange ist somit die zweite Stange nur in der ersten Bewegungsrichtung relativ zu der ersten Stange axial beweglich, sodass dadurch die formschlüssig arretierbare Länge der Tragvorrichtung mittels einer formschlüssigen Verbindung zwischen dem Gegenformschlusselement und dem Fixierungselement bei der ersten Drehposition der zweiten Stange ausführbar ist.

In einer ergänzenden Ausgestaltung ist die erste Bewegungsrichtung eine Bewegung der zweiten Stange aus der ersten Stange ist, sodass bei der ersten Bewegungsrichtung die Länge der Tragvorrichtung vergrößerbar ist oder umgekehrt und/oder die Lagerung als eine Gleitlagerung ausgebildet ist und/oder die Lagerung als eine axiale Bohrung an der ersten Stange ausgebildet ist.

In einer zusätzlichen Ausgestaltung ist der Mechanismus von einem Führungselement und einer Führungsnut gebildet und das Führungselement ist in der Führungsnut wenigstens teilweise angeordnet.

Vorzugsweise ist das Führungselement an der ersten Stange ausgebildet und die Führungsnut ist an der zweiten Stange ausgebildet oder umgekehrt.

In einer ergänzenden Ausführungsform ist das Führungselement als ein Stift oder eine Kugel ausgebildet. Bei einer Ausbildung des Führungselements als eine Kugel ist nur ein Teil der Kugel in der Führungsnut angeordnet und ein anderer Teil der Kugel ist insbesondere an der ersten Stange fixiert.

Zweckmäßig ist das Fixierungselement ist von einem elastischen Element, insbesondere einer Feder, in Richtung zu dem Gegenformschlusselement gedrückt. Das elastische Element drückt das Fixierungselement, insbesondere in der ersten Drehposition der zweiten Stange, in radialer Richtung nach außen zu dem Gegenformschlusselement, sodass dadurch eine formschlüssige Verbindung zwischen dem Fixierungselement und dem Gegenformschlusselement ausführbar ist.

In einer ergänzenden Ausgestaltung ist das Fixierungselement an der zweiten Stange ausgebildet und/oder befestigt und das Gegenformschlusselement ist an der ersten Stange ausgebildet und/oder befestigt, so dass vorzugsweise das Fixierungselement die Bewegung der zweiten Stange mit ausführt oder das Fixierungselement ist an der ersten Stange ausgebildet und/oder befestigt und das Gegenformschlusselement ist an der zweiten Stange ausgebildet und/oder befestigt.

In einer zusätzlichen Ausgestaltung sind die Zähne in Richtung der Bewegungsrichtung an einer ersten Seite im Wesentlichen senkrecht zu der Bewegungsrichtung der zweiten Stange ausgebildet und sind an einer zweiten Seite in einem spitzen Winkel, insbesondere zwischen 20° und 70°, zu der Bewegungsrichtung ausgebildet und die erste und zweite Seite sind gegenüberliegende Seiten. Die Zähne sind insbesondere in Richtung der Bewegungsrichtung an einer ersten Seite im Wesentlichen senkrecht zu der Bewegungsrichtung der zweiten Stange ausgebildet sind, so dass vorzugsweise die Zähne in Richtung der Bewegungsrichtung an einer ersten Seite mit einer Abweichung von weniger als 30°, 20°, 10° oder 5° senkrecht zu der Bewegungsrichtung der zweiten Stange ausgebildet sind. Vorzugsweise sind die ersten und/oder zweiten Seiten der Zähne im Wesentlichen eben ausgebildet. Vorzugsweise sind die Zähne als Rastelemente ausgebildet.

Erfindungsgemäßer Tisch, umfassend eine Tischplatte, mehrere, an der Tischplatte befestigte Tischfüße, wobei an wenigstens einem Tischfuß, insbesondere an sämtlichen Tischfüßen, eine in dieser Schutzrechtsanmeldung beschriebene Tragvorrichtung und/oder Säule und/oder Fuß ausgebildet ist für eine Längenverstellung des wenigstens einen Tischfußes.

In einer ergänzenden Ausgestaltung ist die Lagerung und/oder Bohrung an der ersten Stange koaxial und/oder konzentrisch zu der zweiten Stange ausgebildet.

In einer weiteren Variante umfasst die längenverstellbare Tragvorrichtung einen Mechanismus und aufgrund des Mechanismus verursacht die axiale Translationsbewegung der zweiten Stange eine zusätzliche Rotationsbewegung der zweiten Stange, so dass die zweite Stange zwischen einer ersten Drehposition und einer zweiten Drehposition relativ zu der ersten Stange bewegbar ist mittels der axialen Translationsbewegung der zweiten Stange und in der ersten Drehposition das Fixierungselement und das Gegenformschlusselement in mechanischen Kontakt zueinander stehen, so dass das Fixierungselement formschlüssig an dem Gegenformschlusselement befestigt und/oder befestigbar ist, und in der zweiten Drehposition der mechanische Kontakt zwischen dem Fixierungselement und dem Gegenformschlusselement aufgehoben ist, so dass die formschlüssige Verbindung zwischen dem Fixierungselement und dem Gegenformschlusselement, insbesondere vollständig, aufgehoben ist.

In einer ergänzenden Ausführungsform ist der Mechanismus dahingehend ausgebildet, so dass bei einer Translationsbewegung in einer Bewegungsrichtung zur Vergrößerung der Länge der Tragvorrichtung die zweite Stange von der ersten Drehposition in die zweite Drehposition als Rotationsbewegung bewegbar ist, insbesondere aufgrund der Anordnung des Führungselementes in einem zweiten Verbindungsabschnitt der Führungsnut, und bei einer Translationsbewegung in einer Bewegungsrichtung zur Verkleinerung der Länge der Tragvorrichtung die zweite Stange von der zweiten Drehposition in die erste Drehposition als Rotationsbewegung bewegbar ist, insbesondere aufgrund der Anordnung des Führungselementes in einem ersten Verbindungsabschnitt der Führungsnut.

In einer ergänzenden Ausführungsform ist der Mechanismus dahingehend ausgebildet, so dass bei einer Translationsbewegung in einer Bewegungsrichtung zur Verkleinerung der Länge der Tragvorrichtung die zweite Stange von der ersten Drehposition in die zweite Drehposition als Rotationsbewegung bewegbar ist und bei einer Translationsbewegung in einer Bewegungsrichtung zur Vergrößerung der Länge der Tragvorrichtung die zweite Stange von der zweiten Drehposition in die erste Drehposition als Rotationsbewegung bewegbar ist.

In einer ergänzenden Ausführungsform ist der Mechanismus dahingehend ausgebildet, so dass bei einer Translationsbewegung in der ersten Bewegungsrichtung der zweiten Stange die zweite Stange von der ersten Drehposition in die zweite Drehposition als Rotationsbewegung bewegbar ist und bei einer Translationsbewegung in der zweiten Bewegungsrichtung der zweiten Stange die zweite Stange von der zweiten Drehposition in die erste Drehposition als Rotationsbewegung bewegbar ist oder umgekehrt, wobei die erste und zweite Bewegungsrichtung entgegengesetzt zueinander ausgerichtet sind.

In einer zusätzlichen Variante ist auf die zweite Stange von einem axialen elastischen Element, insbesondere einer Axialfeder, eine Kraft aufgebracht zum Bewegen der zweiten Stange in einer Bewegungsrichtung zur Vergrößerung der Länge der Tragvorrichtung.

In einer weiteren Ausgestaltung ist die zweite Stange in der zweiten Drehposition in der ersten und zweiten Bewegungsrichtung bewegbar ohne einer formschlüssigen Verbindung zwischen dem Fixierungselement und dem Gegenformschlusselement

In einer ergänzenden Ausgestaltung ist der erste und/oder zweite Verbindungsabschnitt der Führungsnut in einem spitzen Winkel, insbesondere zwischen 10° und 80°, zu der Bewegungsrichtung der zweiten Stange ausgerichtet, so dass eine axiale Translationsbewegung der zweiten Stange eine Rotationsbewegung der zweiten Stange verursacht.

In einer weiteren Variante ist die Tragvorrichtung im Wesentlichen stabförmig ausgebildet.

In einer weiteren Ausgestaltung ist die Drehposition der zweiten Stange eine Funktion der axialen Translationsposition der zweiten Stange.

Zweckmäßig ist je einer axialen Translationsposition der zweiten Stange eine, insbesondere nur eine, Drehposition der zweiten Stange zugeordnet.

Zweckmäßig sind je einer axialen Translationsposition der zweiten Stange wenigstens eine, insbesondere nur eine Drehposition und/oder nur zwei Drehpositionen, der zweiten Stange zugeordnet.

In einer zusätzlichen Ausgestaltung ist die zweite Stange in unterschiedlichen axialen Translationspositionen mittels des Fixierungselementes und des Gegenformschlusselements formschlüssig fixierbar.

Vorzugsweise ist die Tragvorrichtung, insbesondere die erste und/oder zweite Stange und/oder das Fixierungselement und/oder das Gegenformschlusselement, wenigstens teilweise, insbesondere vollständig, aus Metall, insbesondere Stahl und/oder Aluminium, und/oder aus Kunststoff ausgebildet.

Erfindungsgemäßer Einrichtungsgegenstand, insbesondere Stuhl, Bank oder Schrank, mit Füßen, wobei der Einrichtungsgegenstand wenigstens eine, vorzugsweise mehrere, in dieser Schutzrechtsanmeldung beschriebene Tragvorrichtung bzw. Tragvorrichtungen umfasst.

Erfindungsgemäße Maschine, Spülmaschine oder Waschmaschine, wobei die Maschine, Spülmaschine oder Waschmaschine wenigstens eine, vorzugsweise mehrere, in dieser Schutzrechtsanmeldung beschriebene Tragvorrichtung bzw. Tragvorrichtungen umfasst.

Erfindungsgemäßes Stativ für eine Kamera, wobei das Stativ wenigstens eine, vorzugsweise mehrere, in dieser Schutzrechtsanmeldung beschriebene Tragvorrichtung bzw. Tragvorrichtungen umfasst.

Im Nachfolgenden wird ein Ausführungsbeispiel der Erfindung unter Bezugnahme auf die beigefügten Zeichnungen näher beschrieben.

Es zeigt:

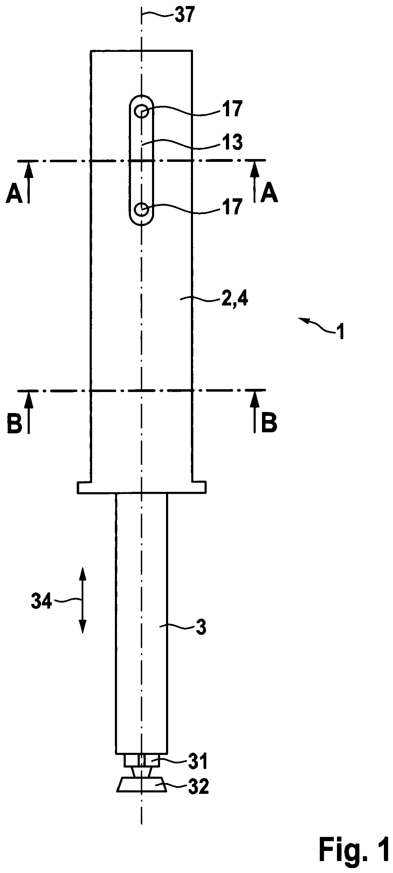

- Fig. 1: eine Vorderansicht einer Tragvorrichtung,

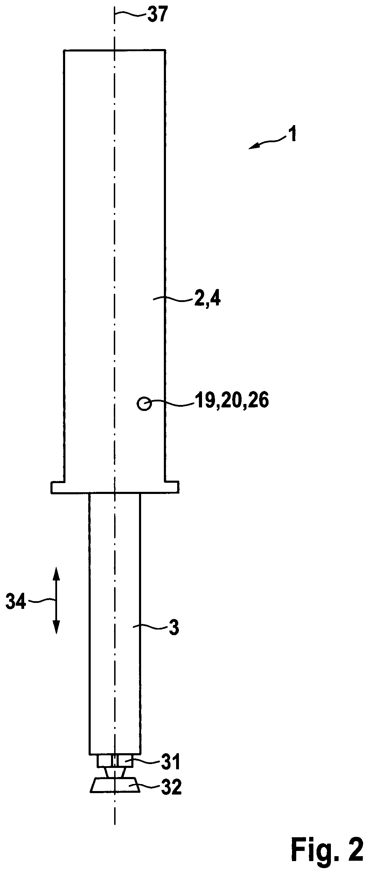

- Fig. 2: eine Rückansicht der Tragvorrichtung,
- Fig. 3: eine Seitenansicht eines Gegenformschlusselementes,
- Fig. 4: eine Seitenansicht eines Führungselementes,
- Fig. 5: eine erste Seitenansicht einer zweiten Stange der Tragvorrichtung,
- Fig. 6: eine zweite Seitenansicht der zweiten Stange der Tragvorrichtung,

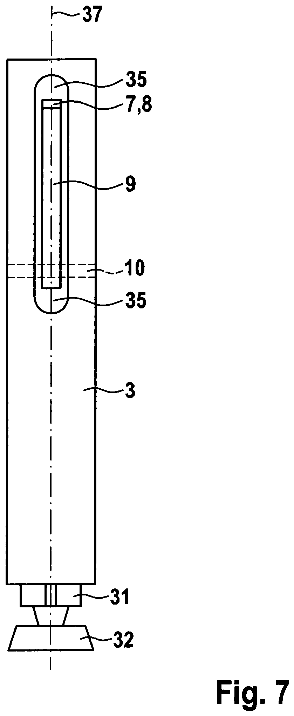

- Fig. 7: eine dritte Seitenansicht der zweiten Stange der Tragvorrichtung,
- Fig. 8: einen Schnitt A-A der Tragvorrichtung gemäß Fig. 1,
- Fig. 9: einen Schnitt B-B der Tragvorrichtung gemäß Fig. 1,
- Fig. 10: einen Längsschnitt der ersten Stange ohne der zweiten Stange und
- Fig. 11: eine Seitenansicht eines Tisches.

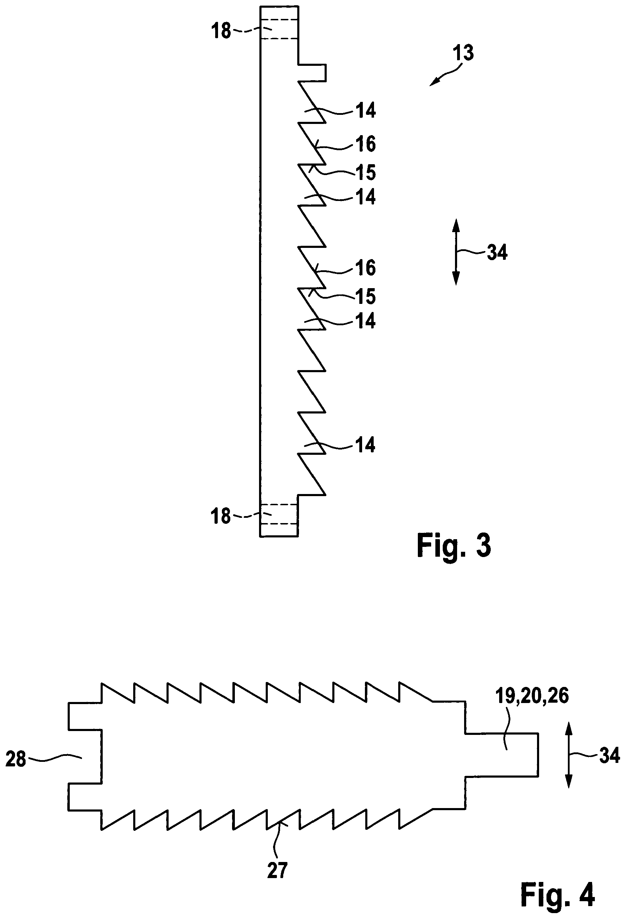

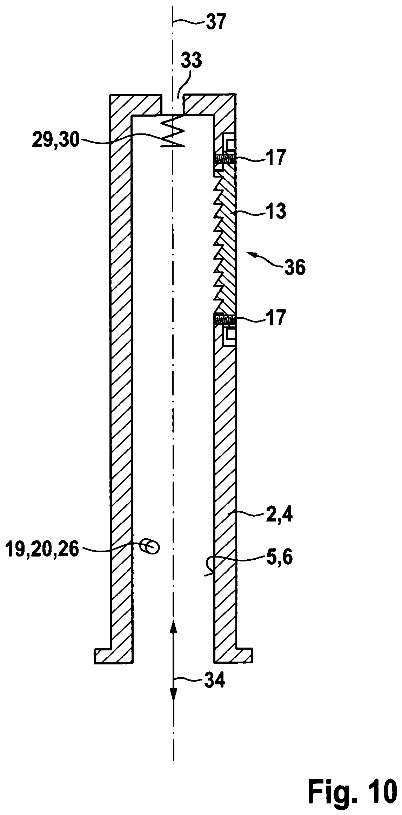

Eine längenverstellbare Tragvorrichtung 1 und/oder längenverstellbare Säule 1 undloder längenverstellbarer Fuß 1 umfasst eine erste Stange 2 und eine zweite Stange 3. Die erste Stange 2 ist als eine Hülse 4 ausgebildet mit einer im Wesentlichen zentrisch ausgebildeten Bohrung 5, die eine Lagerung 6 für die erste Stange 2 bildet. An der ersten Stange 2 ist in einer axialen Richtung ein Längsschlitz 36 ausgebildet (Fig. 10). In dem Längsschlitz 36 ist ein längliches Gegenformschlusselement 13 befestigt (Fig. 3). Das Gegenformschlusselement 13 weist zwei Bohrungen 18 auf und mittels zweier Befestigungsschrauben 17 in Bohrungen mit einem Innengewinde an der ersten Stange 2 und in den Bohrungen 18 an dem Gegenformschlusselement 13 ist das Gegenformschlusselement 13 lösbar an der ersten Stange 2 befestigt. Das Gegenformschlusselement 13 weist eine Vielzahl an Zähnen 14 auf als Rastelemente 14. Die Zähne 14 weisen dabei eine erste Seite 15 und eine zweite Seite 16 auf, jeweils in einer Bewegungsrichtung 34 der zweiten Stange 3 relativ zu der ersten Stange 2. Die erste Seite 15 ist im Wesentlichen senkrecht zu der Bewegungsrichtung 34 ausgerichtet und die zweite Seite 16 ist in einem spitzen Winkel von ungefähr 45° zu der Bewegungsrichtung 34 bzw. einer Längsachse 37 der ersten und zweiten Stange 2, 3 ausgerichtet. Die Zähne 14 des Gegenformschlusselementes 13 sind in radialer Richtung zu der Bohrung 5 der ersten Stange 2 ausgerichtet, jedoch ist der minimale radiale Abstand der radialen Enden der Zähne 14 zu der zentrischen Längsachse 37 größer als der radiale Abstand der Bohrung bzw. der Innenwandung der Bohrung 5 der ersten Stange 2 zu der Längsachse 37.

An der ersten Stange 2 ist zusätzlich ein Führungselement 20 als ein Führungsstift 26 befestigt. Der Führungsstift 26 weist ein Außengewinde 27 auf und das Außengewinde 27 ist in ein Innengewinde an einer Bohrung insbesondere einer radialen Bohrung, an der ersten Stange 2 mit einem Innengewinde eingeschraubt und der Führungsstift 26 ragt in die Bohrung 5 hinein, das heißt, das radiale Ende des Führungsstifts 26 weist einen kleineren radialen Abstand zu der zentrischen Längsachse 37 auf als der radiale Abstand der Bohrung 5 der ersten Stange 2 zu der Längsachse 37 ist.

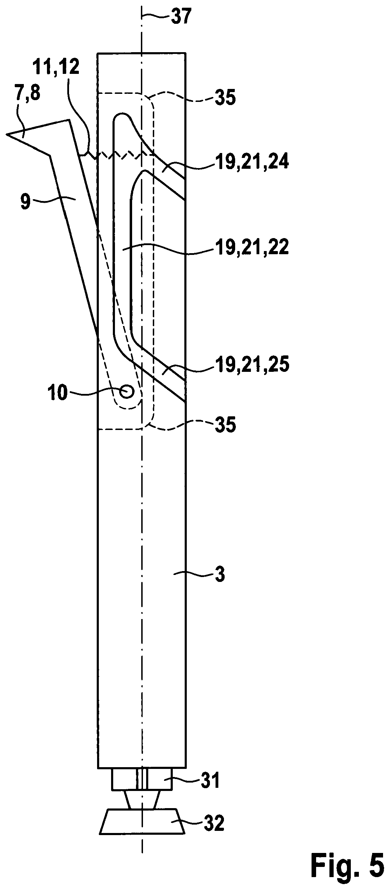

Die zweite Stange 3 weist an einem unteren Ende nicht dargestellte axiale Bohrung mit einem Innengewinde auf und in diese axiale Bohrung ist eine Schraube mit einer Mutter 31 eingeschraubt. An der Mutter 31 mit der Schraube ist zusätzlich ein Befestigungselement angeordnet und an dem Befestigungselement ist verschwenkbar ein Bodenelement 32 zur Auflage auf dem Boden befestigt. Das Bodenelement 32 kann relativ zu der Mutter 31 verschwenkt werden zur Anpassung an einen Boden. In die zweite Stange 3 ist in axialer Richtung eine Aussparung 35 eingearbeitet und in der Aussparung 35 ist ein Rasthebel 9 verschwenkbar befestigt. Der Rasthebel 9 ist mittels eines Lagerbolzens 10 um eine Schwenkachse verschwenkbar relativ zu der zweiten Stange 3 gelagert. An einem Endbereich des Rasthebels 9 abgewandt zu dem Lagerbolzen 10 ist ein Fixierungselement 7 als eine Rastnase 8 ausgebildet. Bei einer Anordnung des Rasthebels 9 im Wesentlichen in der Aussparung 35 ist eine Seite des Fixierungselements 7 im Wesentlichen senkrecht zu der Längsachse 37 bzw. der Bewegungsrichtung 34 ausgerichtet und eine andere gegenüberliegende Seite des Fixierungselementes 7 ist im Wesentlichen in einem Winkel von 45° zu der Bewegungsrichtung 34 und der Längsachse 37 ausgerichtet (Fig. 5).

An der Aussparung 35 der zweiten Stange 3 ist ein Ende eines elastischen Elements 11 befestigt und ein anderes Ende des elastischen Elements 11 ist an dem Rasthebel 9 befestigt. Das elastische Element 11 ist als eine Feder ausgebildet und bringt auf den Rasthebel 9 eine Kraft dahingehend in radialer Richtung auf, sodass das Fixierungselement 7 in radialer Richtung nach außen weg von der zentrischen Längsachse 37 in Richtung zu der ersten Stange 2 gedrückt ist.

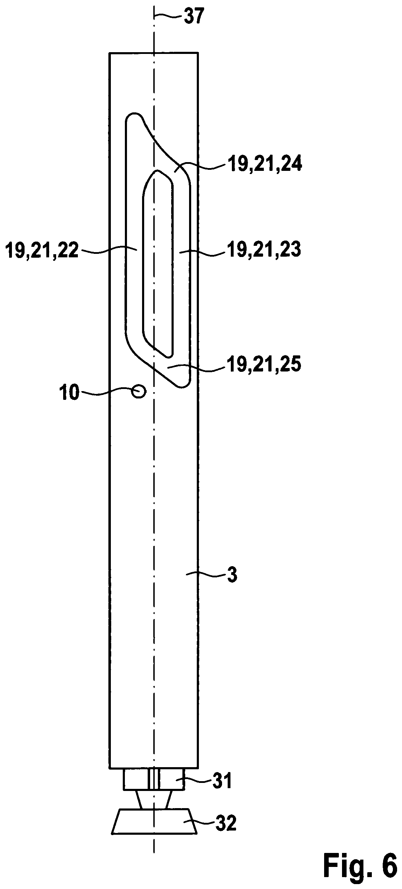

Die radiale Außenseite der zweiten Stange 3, welche im Wesentlichen zylindermantelförmig ausgebildet ist, dient als Gleitlagerung zur Lagerung an der Bohrung 5 der ersten Stange 2. An der radialen Außenseite der zweiten Stange 3 ist zusätzlich eine Führungsnut 21 eingearbeitet. Die Führungsnut 21 (Fig. 6) weist zwei axiale Abschnitte auf, nämlich einen ersten axialen Abschnitt 22 und einen zweiten axialen Abschnitt 23. Der erste und zweite axiale Abschnitt 22, 23 ist in einem größeren Abschnitt zu der Mutter 21 mit einem ersten Verbindungsabschnitt 24 miteinander verbunden und an einem zu der Mutter 31 zugewandten Ende des ersten und zweiten axialen Abschnitts 22, 23 sind der erste und zweite axiale Abschnitt 22, 23 mit einem zweiten Verbindungsabschnitt 25 miteinander verbunden.

Die zweite Stange 3 ist wenigstens teilweise in der Bohrung 5 der ersten Stange 2 gelagert und in axialer Richtung in einer Bewegungsrichtung 34 parallel zu der zentrischen Längsachse 37 bewegbar. Die Längsachse 37 bildet sowohl eine Längsachse 37 für die erste Stange 2 als auch für die zweite Stange 3. Das Führungselement 20 ist in der Führungsnut 21 angeordnet. Das Führungselement 20 und die Führungsnut 21, insbesondere aufgrund der Geometrie der Führungsnut 21, bildet dabei einen Mechanismus 19, sodass eine axiale Translationsbewegung der zweiten Stange 3 relativ zu der ersten Stange 2 in der Bohrung 5 eine Rotationsbewegung der zweiten Stange 3 relativ zu der ersten Stange 2 verursacht zwischen einer ersten Drehposition und einer zweiten Drehposition. In der ersten Drehposition der zweiten Stange 3 fluchten die Zähne 14 des Gegenformschlusselements 13 mit dem Fixierungselement 7 des Rasthebels 9, sodass in der ersten Drehposition ein mechanischer Kontakt zwischen dem Fixierungselement 7 und den Zähnen 14 des Gegenformschlusselements 13 besteht, weil das Fixierungselement 7 von dem elastischen Element 11 in Richtung zu den Zähnen 14 gedrückt ist. In der ersten Drehposition der zweiten Stange 3 relativ zu der ersten Stange 2 ist somit eine formschlüssige Verbindung zwischen den Zähnen 14 des Gegenformschlusselements 13 und dem Fixierungselement 7 ausführbar zur formschlüssigen Arretierung der zweiten Stange 3 an der ersten Stange 2 in axialer Richtung.

In der ersten Drehposition der zweiten Stange 3 befindet sich das Führungselement 20 in dem zweiten axialen Abschnitt 23 der Führungsnut 21. In der zweiten Drehposition der zweiten Stange 3 relativ zu der ersten Stange 2 befindet sich das Führungselement 20 in dem ersten axialen Abschnitt 22 der Führungsnut 21. Bei einer maximalen Länge der Tragvorrichtung 1, das heißt bei der maximalen Anordnung der zweiten Stange 3 außerhalb der ersten Stange 2, befindet sich das Führungselement 20 an der in Fig. 6 dargestellten obersten möglichen Position der Führungsnut 21. Bei einer axialen Translationsbewegung der zweiten Stange 3 (in der zweiten Drehposition der zweiten Stange 3 und ausgehend von der maximalen Länge der Tragvorrichtung 1) in die erste Stange 2 hinein bewegt sich somit das Führungselement 20 in dem ersten axialen Abschnitt 22 in Richtung zu dem zweiten Verbindungsabschnitt 25 der Führungsnut 21. Nach dem Erreichen des Endes des ersten axialen Abschnitts 22 der Führungsnut 21 gelangt das Führungselement 20 aus dem ersten axialen Abschnitt 22 heraus in den schrägen zweiten Verbindungsabschnitt 25, sodass dadurch aufgrund der Führung des Führungselements 20 in dem zweiten Verbindungsabschnitt 25 die zweite Stange 3 von der zweiten Drehposition in die erste Drehposition bewegt wird. Bei einer minimalen Länge der Tragvorrichtung 1, das heißt bei der maximalen Anordnung der zweiten Stange 3 in der ersten Stange 2, befindet sich das Führungselement 20 an der in Fig. 6 dargestellten untersten möglichen Position der Führungsnut 21 am Ende des zweiten Verbindungsabschnitts 25 und am Anfang des zweiten axialen Abschnitts 23.

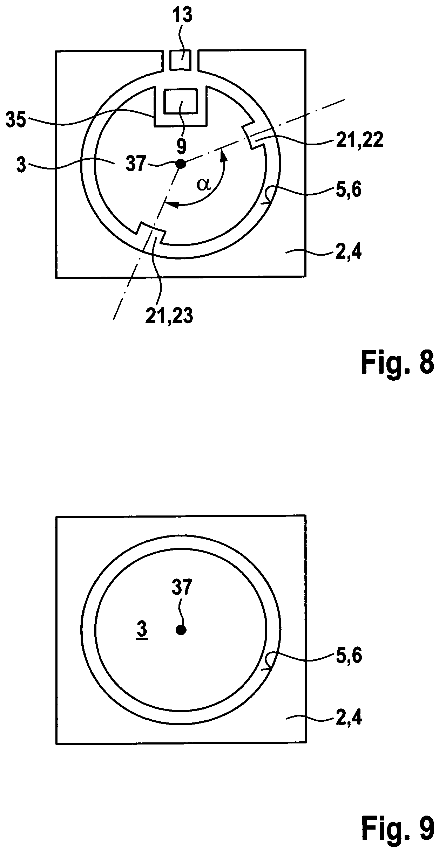

Die erste und zweite Drehposition weisen einen Winkel α von ungefähr 120° zueinander auf, welcher dem Winkel α zwischen dem ersten und zweiten axialen Abschnitt 22, 23 der Führungsnut 21 entspricht (Fig. 8). Nach dem Erreichen der ersten Drehposition gelangt somit das Fixierungselement 7 in mechanischen Kontakt zu den Zähnen 14 des Gegenformschlusselements 13. In der Bohrung 5 ist zwischen dem axialen Ende der zweiten Stange 3 und der ersten Stange 2 ein axiales elastisches Element 29 als eine Axialfeder 30 angeordnet. Die Axialfeder 30 bringt auf die erste Stange 2 eine axiale Druckkraft in Richtung der Bewegungsrichtung 34 und/oder der Längsachse 37 auf, sodass dadurch von der von der Axialfeder 30 auf die zweite Stange 3 aufgebrachten axialen Druckkraft die zweite Stange 3 aus der Bohrung 5 herausgedrückt wird zur Vergrößerung der Länge der Tragvorrichtung 1.

Zur Vergrößerung der Länge der Tragvorrichtung 1 (in der ersten Drehposition der zweiten Stange 3) wird somit von der axialen Feder 30 die zweite Stange 3 aus der Bohrung 5 der ersten Stange 2 herausbewegt und diese Bewegung ist möglich, weil die Geometrie der Zähne 14 und des Fixierungselements 7 diese erste Bewegungsrichtung der zweiten Stange 3 aus der ersten Stange heraus zur Vergrößerung der Länge der Tragvorrichtung 1 ermöglicht. Eine umgekehrte Bewegungsrichtung der zweiten Stange 3 relativ zu der ersten Stange 2, das heißt eine zweite Bewegungsrichtung entgegengesetzt zu der ersten Bewegungsrichtung zur Verkleinerung der Länge der Tragvorrichtung 1, das heißt einer Bewegung der zweiten Stange 3 in die Bohrung 5 der ersten Stange 2 hinein ist in der ersten Drehposition der zweiten Stange 3 von den Fixierungselementen 7 und den Zähnen des Gegenformschlusselements 13 blockiert, weil die ersten Seiten 15 der Zähne 14 auf der Seite des Fixierungselements 7 aufliegen, welches im Wesentlichen senkrecht zu der Längsachse 37 ausgerichtet ist. Eine Rückbewegung der dritten Stange 3 in die zweite Stange 1 hinein zur Verkleinerung der Länge der Tragvorrichtung 1 ist somit in der ersten Drehposition der zweiten Stange 3 ausgeschlossen.

Bei einer weiteren Bewegung der zweiten Stange 3 aus der ersten Stange 2 heraus und einer Vergrößerung der Länge der Tragvorrichtung 1 in der ersten Drehposition der zweiten Stange 3 bewegt sich das Führungselement 20 zu dem Ende des zweiten axialen Abschnitts 23 der Führungsnut 21 und im Weiteren in den ersten Verbindungsabschnitt 24 der Führungsnut 21 hinein. Die axiale Bewegung der zweiten Stange 3 verursacht bei Anordnung des Führungselementes 20 in dem ersten Verbindungsabschnitt 24 eine Rotationsbewegung der zweiten Stange 3 von der ersten Drehposition in die zweite Drehposition. Damit bedingt diese axiale Translationsbewegung und die Rotationsbewegung der zweiten Stange 3, dass der mechanische Kontakt zwischen den Zähnen 14 und dem Fixierungselement 7 aufgehoben wird. Die Translationsbewegung an einem Endbereich mit einer im Wesentlichen maximalen Länge der Tragvorrichtung 1 bedingt somit aufgrund des ersten Verbindungsabschnitts 24 eine Rotationsbewegung der zweiten Stange 3, sodass die zweite Stange 3 von der ersten Drehposition in die zweite Drehposition bewegt wird und dadurch wieder die zweite Stange 3 von der Translationsposition mit der maximalen Länge der Tragvorrichtung 1 zurück in die erste Stange 2 hinein als axiale Translationsbewegung bewegt werden kann (in der zweiten Drehposition der zweiten Stange 3) zur Verkleinerung der Länge der Tragvorrichtung 1 bis zu einer Translationsposition mit einer minimalen Länge der Tragvorrichtung 1. Kurz vor dem Erreichen der Translationsposition der zweiten Stange 3 relativ zu der ersten Stange 2 mit der maximalen Länge der Tragvorrichtung 1 gelangt somit das Führungselement 20 in den zweiten Verbindungsabschnitt 25, was die Rotationsbewegung der zweiten Stange 3 von der zweiten Drehposition in die erste Drehposition bewirkt. Kurz vor dem Erreichen der Translationsposition der zweiten Stange 3 mit der minimalen Länge der Tragvorrichtung 1 gelangt somit das Führungselement 20 in den zweiten Verbindungsabschnitt 25 der Führungsnut 21 und dies bewirkt die Rotationsbewegung der zweiten Stange 3 relativ zu der ersten Stange 2 von der zweiten Drehposition in die erste Drehposition. Das Führungselement 20 bewegt sich somit gemäß Fig. 6 entgegengesetzt zu dem Uhrzeigersinn in der Führungsnut 21.

Das Führungselement 20 weist ein Außengewinde 27 und eine Öffnung 28 für einen Imbusschlüssel (Fig. 4) auf. Das Außengewinde 27 des Führungselements 20 ist in ein Innengewinde einer Bohrung an der ersten Stange 2 eingeschraubt. An der ersten Stange 2 ist ferner eine Axialbohrung 33 mit einem Innengewinde ausgebildet. Die Axialbohrung 33 dient dazu, um die Tragvorrichtung 1 an anderen Komponenten, beispielsweise einem Tischfuß 39 eines Tisches 40, befestigen zu können.

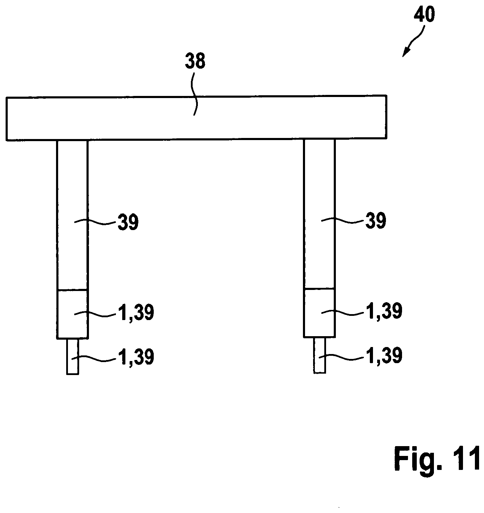

In Fig. 11 ist ein Tisch 40 mit einer Tischplatte 38 und vier Tischfüßen 39 dargestellt. An einem unteren Endbereich der vier Tischfüße 39 ist jeweils eine Tragvorrichtung 1 fixiert. Zur Veränderung der Höhe des Tisches 40 ist es somit lediglich notwendig, die Tischplatte 38 bei der ersten Drehposition der zweiten Stange 3 anzuheben, sodass dadurch die Länge der Tischfüße 39 vergrößert werden kann mittels eines Herausbewegens der zweiten Stange 3 aus der ersten Stange 2. Bei einem weiteren Anheben des Tisches 40, sodass die Bodenelemente 32 keinen Kontakt mehr zum Boden aufweisen und damit sich die zweite Stange 3 in einer axialen Translationsposition befindet mit einer maximalen Länge der Tragvorrichtung 1 kann anschließend wieder die zweite Stange 3 in die erste Stange 2 hineinbewegt werden für eine minimale Länge der Tischfüße 39, sodass dadurch nach dem Erreichen der minimalen Länge der Tischfüße 39 wieder Schritt für Schritt mittels einer Verrastung der Zähne 14 des Gegenformschlusselements 13 an dem Fixierungselement 7 in der ersten Drehposition der zweiten Stange 3 wieder Schritt für Schritt die Länge der Tischfüße 39 vergrößert werden kann zum Erreichen einer vorgegebenen oder notwendigen Höhe des Tisches 40 und/oder zum Ausgleich von Bodenunebenheiten. Zur Verrastung der zweiten Stange 3 in eine vorgegebene axialen Translationsposition relativ zu der ersten Stange 2, das heißt zum Erreichen einer vorgegebenen Länge des Tischfußes 39, ist es somit in vorteilhafter Weise nicht notwendig, dass irgendwelche Arretiermittel betätigt werden, beispielsweise eine Befestigungsschraube. Dies ist einfach lediglich durch eine Veränderung der Translationsposition der zweiten Stange 3 zu der ersten Stange 2 möglich, das heißt mittels eines Anhebens des Tisches 40 und eines anschließenden Absenkens des Tisches 40. Zum Erreichen einer vorgegebenen Höhe des Tisches 40 ist somit lediglich zunächst die minimale Länge des Tischfußes 39 zu erreichen und anschließend kann Schritt für Schritt die entsprechende vorgesehene Länge des Tischfußes 39 eingestellt werden während einer Bewegung der zweiten Stange 3 aus der ersten Stange 2 heraus, das heißt einer Vergrößerung der Länge des Tischfußes 39.

In einem weiteren, nicht dargestellten Ausführungsbeispiel des Tisches 40 mit Tischfüßen 39 ist die Tragvorrichtung 1 dahingehend in die Tischfüße 39 eingebaut oder integriert, dass die zweite Stange 3 oben ist und die erste Stange 2 unten ist. Das obere Ende der zweiten Stange 3 ist mit einem Kugellager an dem Tischfuß 39 gelagert, damit die Rotationsbewegung der zweiten Stange 3 von dem Kugellager aufgenommen werden kann bezüglich dem nicht rotierenden Tischfuß 39. Ferner ist die Tragvorrichtung 1 von einer Hülse des Tischfußes 39 umgeben, so dass die Tragvorrichtung 1 von außen nicht sichtbar sowie staubgeschützt ist und vor mechanischen Beschädigungen mittels der Hülse geschützt ist.

Insgesamt betrachtet sind mit der erfindungsgemäßen Tragvorrichtung 1 und dem erfindungsgemäßen Tisch 40 wesentliche Vorteile verbunden. An der Tragvorrichtung ist eine aufwendige Betätigung von Arretiermitteln zur Arretierung der Länge der Tragvorrichtung 1 nicht notwendig. Aufgrund des Mechanismus 19 erfolgt in der ersten Drehposition der zweiten Stange 3 eine Herstellung einer formschlüssigen Verbindung zwischen dem Gegenformschlusselement 13 und dem Fixierungselement 7 nur in einer zweiten Bewegungsrichtung der zweiten Stange 3 und in einer ersten Bewegungsrichtung der zweiten Stange 3 ist die axiale Translationsbewegung der zweiten Stange 3 nicht blockiert. In der zweiten Drehposition der zweiten Stange 3 kann die zweite Stange 3 in der axialen Translationsbewegung relativ zu der zweiten Stange 3 in beiden Bewegungsrichtungen bewegt werden, ohne dem Aufbau der formschlüssigen Verbindung zwischen dem Gegenformschlusselement 13 und dem Fixierungselement 7. Dadurch kann in vorteilhafter Weise der Betätigungskomfort wesentlich verbessert werden, weil kein aufwendiges und umständliches Betätigen von Arretiermitteln und Lösen von Arretiermitteln notwendig ist. Die Tragvorrichtung 1 kann in unterschiedlichsten Anwendungen eingesetzt werden und neben der Verwendung beispielsweise an einem Tisch 40 kann die Tragvorrichtung 1 beispielsweise an Holmen von Leitern eingesetzt werden zum Ausgleich von Bodenunebenheiten. Ferner kann die Tragvorrichtung 1 auch an Ständern von Fahrrädern in vorteilhafter Weise eingesetzt werden zur Veränderung der Länge des Ständers eines Fahrrades, sodass dadurch ein Fahrrad auch bei Bodenunebenheiten sicher mit dem Ständer gehalten werden kann.

## Patentansprüche

1. Längenverstellbare Tragvorrichtung (1), umfassend
- eine erste Stange (2),
- eine zweite Stange (3),
- eine an der ersten Stange (2) ausgebildete Lagerung (6) zur axial beweglichen Lagerung der zweiten Stange (3) an der ersten Stange (2), so dass von der zweiten Stange (3) eine Translationsbewegung relativ zu der ersten Stange (2) ausführbar ist,
- ein bewegliches Fixierungselement (7) zur formschlüssigen axialen Fixierung der beweglichen zweiten Stange (3) an der ersten Stange (2) indem das Fixierungselement (7) formschlüssig an einem Gegenformschlusselement (13) befestigt ist,
- das Gegenformschlusselement (13) zur formschlüssigen Verbindung mit dem Fixierungselement (7),
- die längenverstellbare Tragvorrichtung (1) einen Mechanismus (19) umfasst und aufgrund des Mechanismus (19) die axiale Translationsbewegung der zweiten Stange (3) eine zusätzliche Rotationsbewegung der zweiten Stange (3) verursacht, so dass die zweite Stange (3) zwischen einer ersten Drehposition und einer zweiten Drehposition relativ zu der ersten Stange (2) bewegbar ist mittels der axialen Translationsbewegung der zweiten Stange (3) und in der ersten Drehposition das Fixierungselement (7) und das Gegenformschlusselement (13) in mechanischen Kontakt zueinander stehen und in der zweiten Drehposition der mechanische Kontakt zwischen dem Fixierungselement (7) und dem Gegenformschlusselement (13) aufgehoben ist,
**dadurch gekennzeichnet, dass**
das Fixierungselement (7) als eine Rastnase (8) oder ein Rastdorn ausgebildet ist und an dem Gegenformschlusselement (13) Zähne (14) ausgebildet sind für die formschlüssige Verbindung der Zähne (14) mit dem Fixierungselement (7) und die Zähne (14) als Rastelemente (14) ausgebildet sind.

2. Tragvorrichtung nach Anspruch 1,
**dadurch gekennzeichnet, dass**
die Geometrie des Gegenformschlusselementes (13) und/oder des Fixierungselements (7) dahingehend ausgebildet sind, so dass bei der ersten Drehposition der zweiten Stange (3) in einer ersten Bewegungsrichtung die zweite Stange (3) relativ zu der ersten Stange (2) axial beweglich als Translationsbewegung bewegbar ist und in einer zweiten Bewegungsrichtung die axiale Translationsbewegung der zweiten Stange (3) relativ der ersten Stange (2) blockiert ist aufgrund der formschlüssigen Verbindung zwischen dem Fixierungselement (7) und dem Gegenformschlusselement (13), wobei die erste Bewegungsrichtung und die zweite Bewegungsrichtung entgegengesetzt zueinander ausgerichtet sind und die Zähne (14) in Richtung der Bewegungsrichtung an einer ersten Seite (15) im Wesentlichen senkrecht zu der Bewegungsrichtung der zweiten Stange (3) ausgebildet sind und an einer zweiten Seite (16) in einem spitzen Winkel, insbesondere zwischen 20° und 70°, zu der Bewegungsrichtung ausgebildet sind und die erste und zweite Seite (15, 16) gegenüberliegende Seiten sind und das Fixierungselement (7) an einer Seite im Wesentlichen, insbesondere mit einer Abweichung von weniger als 30°, 20°, 10° oder 5°, senkrecht zu der Bewegungsrichtung der zweiten Stange (3) ausgebildet, so dass mittels des Aufliegens der Seite des Fixierungselementes (7) auf der ersten Seite (15) der Zähne (14) die axiale Bewegung der zweiten Stange (3) relativ zu der ersten Stange (2) in einer Bewegungsrichtung blockiert ist.

3. Tragvorrichtung nach Anspruch 2,
**dadurch gekennzeichnet, dass**
die erste Bewegungsrichtung eine Bewegung der zweiten Stange (3) aus der ersten Stange (2) heraus ist, so dass bei der ersten Bewegungsrichtung die Länge der Tragvorrichtung (1) vergrößerbar ist oder umgekehrt
und/oder
die Lagerung (6) als eine Gleitlagerung ausgebildet ist und/oder
die Lagerung (6) als eine axiale Bohrung (5) an der ersten Stange (2) ausgebildet ist.

4. Tragvorrichtung nach einem oder mehreren der vorhergehenden Ansprüche,
**dadurch gekennzeichnet, dass**
der Mechanismus (19) von einem Führungselement (20) und einer Führungsnut (21) gebildet ist und das Führungselement (20) in der Führungsnut (21) wenigstens teilweise angeordnet ist.

5. Tragvorrichtung nach Anspruch 4,
**dadurch gekennzeichnet, dass**
das Führungselement (20) an der ersten Stange (2) ausgebildet ist und die Führungsnut (21) an der zweiten Stange (3) ausgebildet ist oder umgekehrt.

6. Tragvorrichtung nach Anspruch 4 oder 5,
**dadurch gekennzeichnet, dass**
das Führungselement (20) als ein Stift (26) oder eine Kugel ausgebildet ist.

7. Tragvorrichtung nach einem oder mehreren der vorhergehenden Ansprüche,
**dadurch gekennzeichnet, dass**
das Fixierungselement (7) von einem elastischen Element (11), insbesondere einer Feder (12), in Richtung zu dem Gegenformschlusselement (13) gedrückt ist

8. Tragvorrichtung nach einem oder mehreren der vorhergehenden Ansprüche,
**dadurch gekennzeichnet, dass**
das Fixierungselement (7) an der zweiten Stange (3) ausgebildet und/oder befestigt ist und das Gegenformschlusselement (13) an der ersten Stange (2) ausgebildet und/oder befestigt ist oder
das Fixierungselement (7) an der ersten Stange (2) ausgebildet und/oder befestigt ist und das Gegenformschlusselement (13) an der zweiten Stange (3) ausgebildet und/oder befestigt ist.

9. Tragvorrichtung nach einem oder mehreren der vorhergehenden Ansprüche,
**dadurch gekennzeichnet, dass**
die Zähne (14) in Richtung der Bewegungsrichtung an einer ersten Seite (15) im Wesentlichen senkrecht zu der Bewegungsrichtung der zweiten Stange (3) ausgebildet sind und an einer zweiten Seite (16) in einem spitzen Winkel, insbesondere zwischen 20° und 70°, zu der Bewegungsrichtung ausgebildet sind und die erste und zweite Seite (15, 16) gegenüberliegende Seiten sind.

10. Tragvorrichtung nach einem oder mehreren der vorhergehenden Ansprüche,
**dadurch gekennzeichnet, dass**
die Lagerung (6) und/oder Bohrung an der ersten Stange (2) koaxial und/oder konzentrisch zu der zweiten Stange (3) ausgebildet ist.

11. Tragvorrichtung nach einem oder mehreren der vorhergehenden Ansprüche,
**dadurch gekennzeichnet, dass**
auf die zweite Stange (3) von einem axialen elastischen Element (29), insbesondere einer Axialfeder (30), eine Kraft aufgebracht ist zum Bewegen der zweiten Stange (3) in einer Bewegungsrichtung zur Vergrößerung der Länge der Tragvorrichtung (1).

12. Tisch (40), umfassend
- eine Tischplatte (38),
- mehrere, an der Tischplatte (38) befestigte Tischfüße (39),
**dadurch gekennzeichnet, dass**
an wenigstens einem Tischfuß (39), insbesondere an sämtlichen Tischfüßen (39), eine Tragvorrichtung (1) gemäß einem oder mehrerer der vorhergehenden Ansprüche ausgebildet ist für eine Längenverstellung des wenigstens einen Tischfußes (39).

13. Einrichtungsgegenstand, insbesondere Stuhl, Bank oder Schrank, mit Füßen,
**dadurch gekennzeichnet, dass**
der Einrichtungsgegenstand wenigstens eine, vorzugsweise mehrere, Tragvorrichtungen gemäß einem oder mehrerer der Ansprüche 1 bis 11 umfasst.

14. Maschine, Spülmaschine oder Waschmaschine,
**dadurch gekennzeichnet, dass**
die Maschine, Spülmaschine oder Waschmaschine wenigstens eine, vorzugsweise mehrere, Tragvorrichtungen gemäß einem oder mehrerer der Ansprüche 1 bis 11 umfasst.

15. Stativ für eine Kamera,
**dadurch gekennzeichnet, dass**
das Stativ wenigstens eine, vorzugsweise mehrere, Tragvorrichtungen gemäß einem oder mehrerer der Ansprüche 1 bis 11 umfasst.

## Claims

1. Length-adjustable support device (1), comprising
- a first rod (2),
- a second rod (3),
- a bearing (6) formed on the first rod (2) for axially movably mounting the second rod (3) on the first rod (2) such that the second rod (3) is movable in a translational motion relative to the first rod (2),
- a movable fastening element (7) for interlockingly axially fastening the movable second rod (3) to the first rod (2) by interlockingly fastening the fastening element (7) to a mating interlocking-connection element (13),
- the mating interlocking-connection element (13) for the interlocking connection to the fastening element (7),
- the length-adjustable support device (1) comprises a mechanism (19) and, because of the mechanism (19), the axial translation motion of the second rod (3) causes an additional rotational motion of the second rod (3), the second rod (3) thus being movable between a first rotational position and a second rotational position relative to the first rod (2) by means of the axial translation motion of the second rod (3), the fastening element (7) and the mating interlocking-connection element (13) being in mechanical contact with each other in the first rotational position and the mechanical contact between the fastening element (7) and the mating interlocking-connection element (13) being released in the second rotational position,
**characterized in that**
the fastening element (7) is designed as a locking lug (8) or a locking pin and the teeth (14) are formed on the mating interlocking-connection element (13) for the interlocking connection of the teeth (14) with the fastening element (7) and the teeth (14) are formed as locking elements (14).

2. Support device according to claim 1,
**characterized in that**
the geometry of the mating interlocking-connection element (13) and/or the fastening element (7) are designed such that, in the first rotational position of the second rod (3) in a first direction of motion, the second rod (3) is relative to the first rod (2) axially movable as a translation motion and the axial translation motion of the second rod (3) relative to the first rod (2) is blocked in a second direction of motion due to the interlocking connection between the fastening element (7) and the mating interlocking-connection element (13), whereby the first direction of motion and the second direction of motion are opposite to each other and the teeth (14) are formed in the direction of the motion on a first side (15) in the main perpendicular to the direction of motion of the second rod (3) and are formed on a second side (16) at an acute angle, in particular between 20° and 70°, to the direction of the motion and the first and second sides (15, 16) are opposite sides and the fastening element (7) is in the main formed on one side, in particular with a deviation of less than 30°, 20°, 10° or 5°, perpendicular to the direction of motion of the second rod (3), so that by means of the laying of the side of the fastening element (7) on the first side (15) of the teeth (14), the axial motion of the second rod (3) relative to the first rod (2) is blocked in one direction of motion,

3. Support device according to claim 2,
**characterized in that**
the first direction of motion is a motion of the second rod (3) out of the first rod (2), so that in the first direction of motion the length of the support device (1) is increasable or vice versa
and/or
the bearing (6) is designed as a slide bearing
and/or
the bearing (6) is designed as an axial bore (5) on the first rod (2).

4. Support device according to one or more of the preceding claims, **characterized in that**
the mechanism (19) is formed by a guide element (20) and a guide groove (21) and the guide element (20) is at least partially arranged in the guide groove (21).

5. Support device according to claim 4,
**characterized in that**
the guide element (20) is formed on the first rod (2) and the guide groove (21) is formed on the second rod (3) or vice versa.

6. Support device according to claim 4 or 5,
**characterized in that**
the guide element (20) is designed as a pin (26) or a ball.

7. Support device according to one or more of the preceding claims,
**characterized in that**
the fastening element (7) is pressed by an elastic element (11), in particular a spring (12), in direction to the mating interlocking-connection element (13).

8. Support device according to one or more of the preceding claims,
**characterized in that**
the fastening element (7) is formed and/or fastened on the second rod (3) and the mating interlocking-connection element (13) is formed and/or fastened on the first rod (2)
or
the fastening element (7) is formed and/or fastened on the first rod (2) and the mating interlocking-connection element (13) is formed and/or fastened on the second rod (3).

9. Support device according to one or more of the preceding claims,
**characterized in that**
the teeth (14) are formed in the direction of the motion on a first side (15) in the main perpendicular to the direction of motion of the second rod (3) and are formed on a second side (16) at an acute angle, in particular between 20° and 70°, to the direction of the motion and the first and second sides (15, 16) are opposite sides.

10. Support device according to one or more of the preceding claims,
**characterized in that**
the bearing (6) and/or bore on the first rod (2) is coaxial and/or concentric formed to the second rod (3).

11. Support device according to one or more of the preceding claims,
**characterized in that**
a force is applied to the second rod (3) by an axial elastic element (29), in particular an axial spring (30), for moving the second rod (3) in a direction of motion to increase the length of the support device (1).

12. Table (40), comprising
- a table top (38),
- several table feet (39) attached to the table top (38),
**characterized in that**
on at least one table foot (39), in particular on all table feet (39), a support device (1) according to one or more of the preceding claims is formed for a length adjustment of the at least one table foot (39).

13. Furnishing item, in particular a chair, bench or cupboard, with feet,
**characterized in that**
the furnishing item comprises at least one, preferably a plurality, support devices according to one or more of the claims 1 to 11.

14. Machine, dishwasher or washing machine,
**characterized in that**
the machine, dishwasher or washing machine comprises at least one, preferably a plurality, support devices according to one or more of the claims 1 to 11.

15. Tripod according to the invention for a camera,
**characterized in that**
the tripod comprises at least one, preferably a plurality, support devices according to one or more of the claims 1 to 11.

## Revendications

1. Dispositif de support (1) réglable en longueur, comprenant
- une première tige (2),
- une deuxième tige (3),
- un palier (6) formé sur la première tige (2) pour le montage mobile axialement de la deuxième tige (3) sur la première tige (2), de sorte qu'un mouvement de translation par rapport à la première tige (2) puisse être effectué par la deuxième tige (3),
- un élément de fixation (7) mobile pour la fixation axiale par complémentarité de formes de la deuxième tige mobile (3) sur la première tige (2) par le fait que l'élément de fixation (7) est fixé par complémentarité de formes à un élément conjugué d'engagement par complémentarité de formes (13),
- l'élément conjugué d'engagement par complémentarité de formes (13) pour la liaison par complémentarité de formes à l'élément de fixation (7),
- le dispositif de support (1) réglable en longueur comprend un mécanisme (19) et, en raison du mécanisme (19), le mouvement de translation axial de la deuxième tige (3) provoque un mouvement de rotation supplémentaire de la deuxième tige (3), de sorte que la deuxième tige (3) soit mobile entre une première position de rotation et une deuxième position de rotation par rapport à la première tige (2) au moyen du mouvement de translation axial de la deuxième tige (3) et, dans la première position de rotation, l'élément de fixation (7) et l'élément conjugué d'engagement par complémentarité de formes (13) sont en contact mécanique l'un avec l'autre et, dans la deuxième position de rotation, le contact mécanique entre l'élément de fixation (7) et l'élément conjugué d'engagement par complémentarité de formes (13) est supprimé,
**caractérisé en ce que**
l'élément de fixation (7) est réalisé sous la forme d'un ergot d'encliquetage (8) ou d'un mandrin d'encliquetage et des dents (14) sont formées sur l'élément conjugué d'engagement par complémentarité de formes (13) pour la liaison par complémentarité de forme des dents (14) à l'élément de fixation (7) et les dents (14) sont réalisées sous forme d'éléments d'encliquetage (14).

2. Dispositif de support selon la revendication 1,
**caractérisé en ce que**
la géométrie de l'élément conjugué d'engagement par complémentarité de formes (13) et/ou de l'élément de fixation (7) est formée de telle sorte que dans la première position de rotation de la deuxième tige (3), dans un premier sens de mouvement, la deuxième tige (3) est mobile axialement par rapport à la première tige (2) comme mouvement de translation et, dans un deuxième sens de mouvement, le mouvement de translation axial de la deuxième tige (3) par rapport à la première tige (2) est bloqué en raison de la liaison par complémentarité de formes entre l'élément de fixation (7) et l'élément conjugué d'engagement par complémentarité de formes (13), le premier sens de mouvement et le deuxième sens de mouvement étant orientés de manière opposée l'un par rapport à l'autre et les dents (14) étant formées sensiblement perpendiculairement au sens de mouvement de la deuxième tige (3) sur un premier côté (15) dans la direction du sens de mouvement et étant formées suivant un angle aigu, en particulier entre 20° et 70°, par rapport au sens de mouvement sur un deuxième côté (16) et les premier et deuxième côtés (15, 16) étant des côtés opposés et l'élément de fixation (7) étant, sur un côté, formé sensiblement perpendiculairement au sens de mouvement de la deuxième tige (3), en particulier avec un écart de moins de 30°, 20°, 10° ou 5°, de sorte que grâce à l'appui du côté de l'élément de fixation (7) sur le premier côté (15) des dents (14) le mouvement axial de la deuxième tige (3) par rapport à la première tige (2) soit bloqué dans un sens de mouvement.

3. Dispositif de support selon la revendication 2,
**caractérisé en ce que**
le premier sens de mouvement est un mouvement de la deuxième tige (3) hors de la première tige (2), de sorte que, dans le premier sens de mouvement, la longueur du dispositif de support (1) peut être augmentée ou inversement
et/ou
le palier (6) est formé comme un palier lisse
et/ou
le palier (6) est formé comme un alésage axial (5) sur la première tige (2).

4. Dispositif de support selon l'une ou plusieurs des revendications précédentes,
**caractérisé en ce que**
le mécanisme (19) est formé par un élément de guidage (20) et une rainure de guidage (21) et l'élément de guidage (20) est disposé au moins partiellement dans la rainure de guidage (21).

5. Dispositif de support selon la revendication 4,
**caractérisé en ce que**
l'élément de guidage (20) est formé sur la première tige (2) et la rainure de guidage (21) est formée sur la deuxième tige (3) ou inversement.

6. Dispositif de support selon la revendication 4 ou 5,
**caractérisé en ce que**
l'élément de guidage (20) est formé comme une goupille (26) ou une bille.

7. Dispositif de support selon l'une ou plusieurs des revendications précédentes,
**caractérisé en ce que**
l'élément de fixation (7) est pressé par un élément élastique (11), en particulier un ressort (12), en direction de l'élément conjugué d'engagement par complémentarité de formes (13).

8. Dispositif de support selon l'une ou plusieurs des revendications précédentes,
**caractérisé en ce que**
l'élément de fixation (7) est formé et/ou fixé sur la deuxième tige (3) et
l'élément conjugué d'engagement par complémentarité de formes (13) est formé et/ou fixé sur la première tige (2)
ou
l'élément de fixation (7) est formé et/ou fixé sur la première tige (2) et l'élément conjugué d'engagement par complémentarité de formes (13) est formé et/ou fixé sur la deuxième tige (3).

9. Dispositif de support selon l'une ou plusieurs des revendications précédentes,
**caractérisé en ce que**
les dents (14) sont formées sensiblement perpendiculairement au sens de mouvement de la deuxième tige (3) sur un premier côté (15) dans la direction du sens de mouvement et sont formées suivant un angle aigu, en particulier entre 20° et 70°, par rapport au sens de mouvement sur un deuxième côté (16) et les premier et deuxième côtés (15, 16) sont des côtés opposés.

10. Dispositif de support selon l'une ou plusieurs des revendications précédentes,
**caractérisé en ce que**
le palier (6) et/ou l'alésage sur la première tige (2) sont formés de manière coaxiale et/ou concentrique par rapport à la deuxième tige (3).

11. Dispositif de support selon l'une ou plusieurs des revendications précédentes,
**caractérisé en ce**
**qu'**une force est appliquée sur la deuxième tige (3) par un élément (29) élastique axial, en particulier un ressort axial (30), pour le mouvement de la deuxième tige (3) dans un sens de mouvement pour l'augmentation de la longueur du dispositif de support (1).

12. Table (40), comprenant
- un plateau de table (38),
- plusieurs pieds de table (39) fixés au plateau de table (38),
**caractérisée en ce**
**qu'**un dispositif de support (1) selon l'une ou plusieurs des revendications précédentes est formé sur au moins un pied de table (39), en particulier sur tous les pieds de table (39), pour un réglage en longueur de l'au moins un pied de table (39).

13. Article d'ameublement, en particulier chaise, banc ou armoire, comportant des pieds,
**caractérisé en ce que**
l'article d'ameublement comprend au moins un, de préférences plusieurs dispositifs de support selon l'une ou plusieurs des revendications 1 à 11.

14. Machine, lave-vaisselle ou machine à laver,
caractérisé(e) en ce que
la machine, le lave-vaisselle ou la machine à laver comprend au moins un, de préférences plusieurs dispositifs de support selon l'une ou plusieurs des revendications 1 à 11.

15. Pied de caméra,
**caractérisé en ce que**
le pied comprend au moins un, de préférences plusieurs dispositifs de support selon l'une ou plusieurs des revendications 1 à 11.
